# EUROPEAN PATENT SPECIFICATION

(11) **EP 3 001 545 B1**
(45) Date of publication and mention of the grant of the patent: **06.06.2018**
(21) Application number: 15186767.8
(22) Date of filing: 24.09.2015
(51) Int. Cl.: H02K 5/136

(54) **INTERNAL PRESSURE ATTENUATOR DEVICE FOR ROTATING ELECTRICAL MACHINES ABLE TO OPERATE IN EXPLOSIVE ATMOSPHERES**
INNENDRUCKDÄMPFUNGSVORRICHTUNG FÜR ROTIERENDE ELEKTRISCHE MASCHINEN FÜR DEN BETRIEB IN EXPLOSIONSGEFÄHRDETEN UMGEBUNGEN
DISPOSITIF ATTÉNUATEUR DE PRESSION INTERNE POUR MACHINES ÉLECTRIQUES TOURNANTES CAPABLE DE FONCTIONNER DANS DES ATMOSPHÈRES EXPLOSIVES

(30) Priority: 26.09.2014 US 201462055755 P
(43) Date of publication of application: 30.03.2016
(73) Proprietor: Weg Equipamentos Electricos S.A., 89256-900 Jaragua do Sul - SC (BR)
(72) Inventor: CEZARIO, Cassiano Antunes, Jaraguá do Sul, Santa Catarina (BR)
(74) Representative: Cabinet Plasseraud

(56) References cited:
- WO-A2-2012/097060
- JP-A- H06 121 482
- US-A1- 2011 203 235
- US-A1- 2014 223 689

## Description

### FIELD OF THE INVENTION

The present invention refers to an internal pressure attenuator device for rotating electrical machines able to operate in explosive atmospheres and, more specifically, to a new technical solution that allows reducing the internal pressure in the machine casing, enabling significant reductions of the pressure level inside the machine resulting from an eventual combustion process.

### BACKGROUND OF THE INVENTION

Rotating electrical machines are widely known in the art, and basically comprise a static part (stator) and a rotating part (rotor). In a simplified way, the stator is made up of a slotted magnetic core where coils or windings are placed, and the rotor consists of a slotted magnetic core that can be filled with coils or windings, or filled with liquid metal and then solidified. This assembly is mounted on an axle, thus producing the rotor.

When disposed in areas classified as "explosive atmosphere", electrical machines may present the risk of acting as an ignition source.

Explosive atmospheres are those that contain, in addition to oxygen, a proportion of gas, steam, dust or fibers, where a spark from an electrical circuit or the heating of a device can be an ignition source or cause an explosion. This kind of atmosphere is found, for example, in petrochemical, food, pharmaceutical, paper and textile industries.

The definition of "combustion process" can be attributed to the rate of flame propagation and to the generated pressures. Usually, combustion processes with flame propagation speeds of up to 2 m/s and pressures below 4 bar are referred to as "burning". For speeds between 0.5 and 4.0 m/s at pressures ranging between 4.0 and 10.0 bar the term "explosion" is used. The term "blasting" is adopted when the pressure exceeds 10.0 bar and speeds exceed 30 m/s and even exceed the supersonic speed.

Therefore, the electrical machines designed to operate in this kind of atmosphere shall be built in such a way as to avoid or reduce the risk of explosion. Usually, the technical standards related to this matter adopt the term "explosion" to encompass any combustion process.

One known way to do this is to confine the parts that can cause the ignition of an explosive atmosphere within a casing capable of withstanding the pressure generated by an internal explosion without allowing it to spread to the external environment. Namely, the machine casing shall be capable of withstanding the pressure wave generated by a combustion inside.

Usually, the way to achieve this is by increasing the thickness of the casing in order to make it able to withstand the mechanical stresses from this explosion process. Thus, the intention is to limit the effect - in this case, the pressure generated by the combustion process, and not the cause - minimizing the pressure.

It happens that increasing the thickness of the casing causes an increase of weight and volume in the rotating electrical machine, and consequently, operational restrictions and cost increase. In some cases, performing prior tests is required to ensure that the elements that are part of the casing are able to withstand the occurrence of explosion. These tests, which can be performed on the electrical machine components and/or on the electrical machine after assembled, result in a higher manufacturing costs and higher manufacturing times, directly impacting on the competitiveness of the product.

European document EP 0 113 628 discloses an electrical rotary machine with an explosion-proof casing formed with shields. The shields comprise a surface substantially perpendicular to the axis of the rotor, an outer cylindrical surface and an inner cylindrical surface, each of these cylindrical surfaces being parallel to the axis of the rotor. The explosion-proof casing is constituted by the casing and fixed shields, the cylindrical surfaces being at the same side of their plane surface and the outer cylindrical surface being situated in the immediate vicinity of the casing.

While this document shows a more economical solution than the one which involves just a casing with a greater thickness, the proposed solutions lie on the use of the reinforcement shields that surround the stator, which causes a significant increase of the whole mass.

Document JP H 06 121482 shows a sealed motor having enclosures made of meshy or porous heat conductive materials which connect the wall faces of the brackets of the motor shaft bearings with the end faces of the stator core. The enclosure presents a heat radiating effect to allow a possible ignited flame to be cooled and extinguished, and also acts as a barrier against lubricant oil droplets.

### OBJECTIVES OF THE INVENTION

Considering the disadvantages mentioned above and others well-known by those skilled in the art, the present invention provides a new rotating electrical machine that allows the attenuation of the internal pressure in the machine casing, providing a more attractive option from an economic point of view and making the machine able to operate in explosive atmospheres.

Another objective of the present invention is to provide an internal pressure attenuation solution that does not require increasing the thickness and mass of the rotating electrical machine casing.

Still another object of the present invention is to provide an internal pressure attenuation solution that can be used in several different types of rotating electrical machines.

Yet another object of the present invention is to provide an internal pressure attenuation solution that is able to avoid flame propagation to the exterior of the casing.

### BRIEF DESCRIPTION OF THE INVENTION

The present invention refers to a rotating electrical machine of the type that has a casing with a cover defining a cavity and a rotor-stator assembly inside the casing, the electrical machine comprising a pressure attenuator device inside the cavity, positioned concentrically to the center of the stator coils and in axial direction between the head coil and the casing cover, the device comprising a screen comprising:
∘ a circular ring defined by a cylindrical wall, with a plurality of opening being disposed on the ring wall, or
∘ a polyhedron-shaped wall defined by a plurality of wall sides, with a plurality of openings being disposed on the wall sides, or
∘ a disk defined by a flat wall and an inclined wall which projects from the flat wall, with a plurality of openings being disposed on the inclined wall,
wherein the openings are configured to segregate a flame front propagating from an ignition source formed by a combustion process originated in the cavity.

It should be noticed that the term "openings" encompass any material discontinuity, such as slots, holes, orifices, or hollow spaces in the device, having any geometry or dimensions, provided that they allow the segregation of the flame front.

Preferably, the openings have a circular geometry.

In an embodiment of the present invention, the pressure attenuator device is attached to one of the covers of the rotating electrical machine. However, in alternative embodiments, the device may be attached to any location inside the cavity, as, for example, the coil or the axle of the electrical rotating machine.

### BRIEF DESCRIPTION OF THE FIGURES

The present invention will next be described in more detail, based on examples of execution represented in the drawings. The figures show the following:
Figures 1A to 1D - are graphical representations showing, over time, the flame front and the pressure inside the cavity of a rotating electrical machine in accordance with the prior art;
Figure 2 - is a perspective view of the pressure attenuator device according to a first embodiment of the present invention;

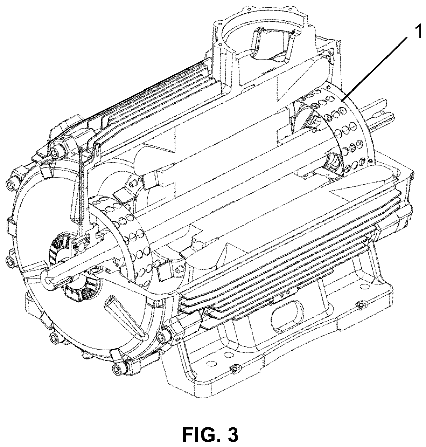

Figure 3 - is a sectioned view of a rotating electrical machine having a pressure attenuator device according to the first embodiment of the present invention;
Figures 4A to 4F - are graphical representations showing, over time, the flame front and the pressure inside the cavity of a rotating electrical machine including the device according to the first embodiment of the present invention;
Figure 5 - is a perspective view of the pressure attenuator device according to a second embodiment of the present invention;
Figure 6 - is a perspective view of the pressure attenuator device according to a third embodiment of the present invention;
Figure 7 - is a sectioned view of a rotating electrical machine having a pressure attenuator device according to the third embodiment of the present invention.

### DETAILED DESCRIPTION OF THE FIGURES

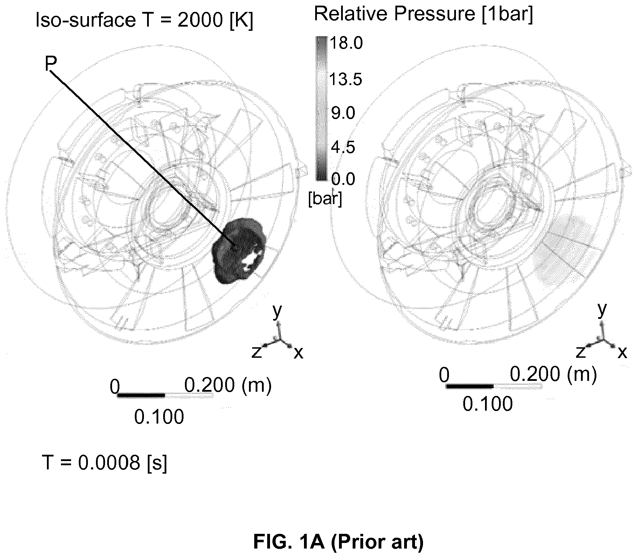

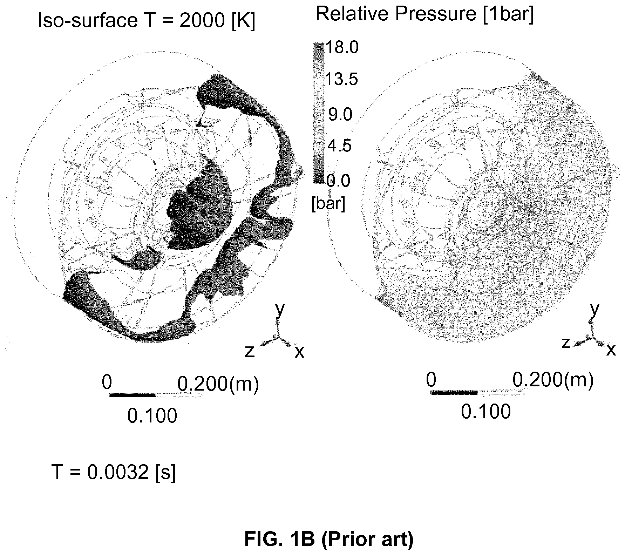

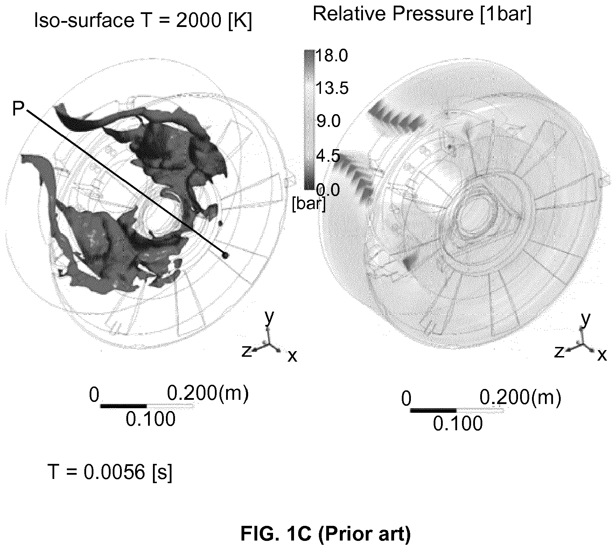

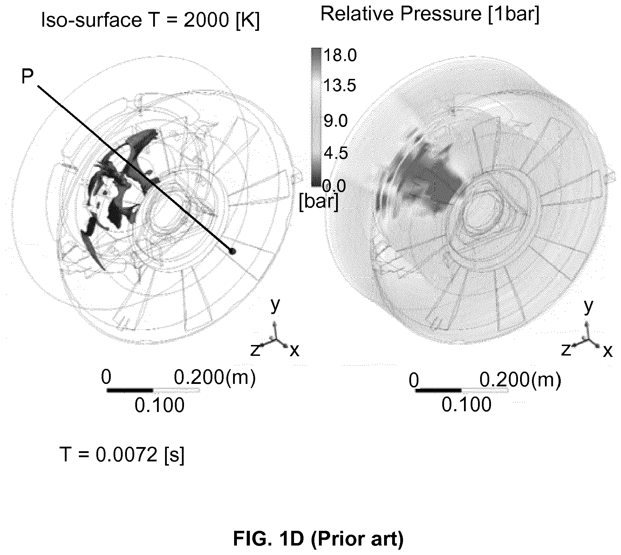

Figures 1A and 1D are graphical representations showing, over time, the flame front and the pressure inside the cavity of a rotating electrical machine in accordance with the prior art. Thus, the point P corresponds to the ignition point, the figures on the left show the flame front at a temperature of 2000 K and the figures on the right show the pressure, in bars, within the cavity.

The figures show the cavity inside the cover and part of the rotating electrical machine casing (e.g. an electric motor).

As can be seen in Figures, in the process of combustion in a cavity, the flame front tends to propagate spherically from the ignition point (point P in the figures) The propagation process of the flame front tends to compress the gas mixture, which has not been consumed, resulting in a peak pressure when this mass of compressed gas passes through the combustion process, since there is a concentration of the potential energy.

To avoid accidents, in rotating electrical machines known from the prior art, the casing must be dimensioned to withstand the pressure peak.

The present invention proposes a new solution that allows the segmentation of the propagation of the flame front on several different fronts, avoiding the localized concentration of the gases that have not been burned.

This solution is achieved by a pressure attenuator device 1 disposed within the cavity of the rotating electrical machine, the device comprising a screen with openings that enable the segregation of the flame front.

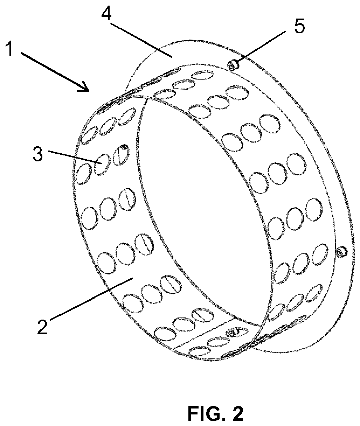

Figure 2 shows a first embodiment of the pressure attenuator device. In this embodiment, the device 1 comprises a circular ring 2 defined by a cylindrical wall having a plurality of openings 3 disposed on the ring wall.

It should be noticed that the surface of the cylindrical wall may be smooth, as shown in the figures, or uneven, such, as for example, a corrugated or notched wall.

The ring 2 is preferably attached to the cover at the extremity of the rotating electrical machine. As known to those skilled in the art, the cover is the end portion of the machine casing, that is, the cover that closes the cylindrical housing of the machine.

Thus, the device 1 may also include a substantially perpendicular edge 4 which helps to secure the attachment of the ring 2 (e.g. by means of screws 5).

Preferably, the device 1 is positioned concentrically and co-radially to the center of the stator coils, and in the axial direction between the stator head and the casing cover.

However, it should be noted that this position may vary depending on the internal ventilation circuit of the rotating electrical machine. For example, the device 1 may be positioned to be under or over the coil head in the radial direction.

In fact, it should be noted that the device of the present invention could be attached to anywhere in the cavity of the rotating electrical machine, whether attached to the cover, casing, coil or even to the machine axle.

In the first embodiment shown in the figures, the diameter of the ring 2 of the device 1 is associated with the size of the rotating electrical machine, and usually, ranges from 50 mm to 1000 mm.

The geometry of the openings 3 of the circular ring can also assume different shapes, still maintaining the system efficiency. Similarly, the amount of openings 3 can be varied depending on the dimensions of the circular ring 2.

Accordingly, it should be noted that the term "openings" encompass any material discontinuity, such as slots, holes, orifices, or hollow spaces in the device, having any geometry or dimensions, provided that they allow the segregation of the flame front.

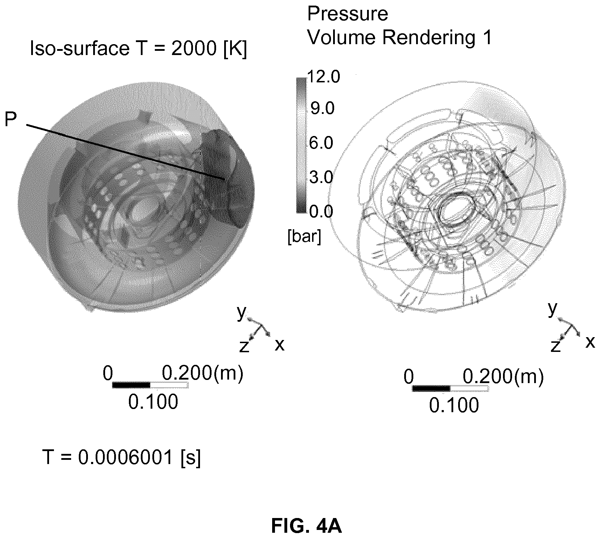

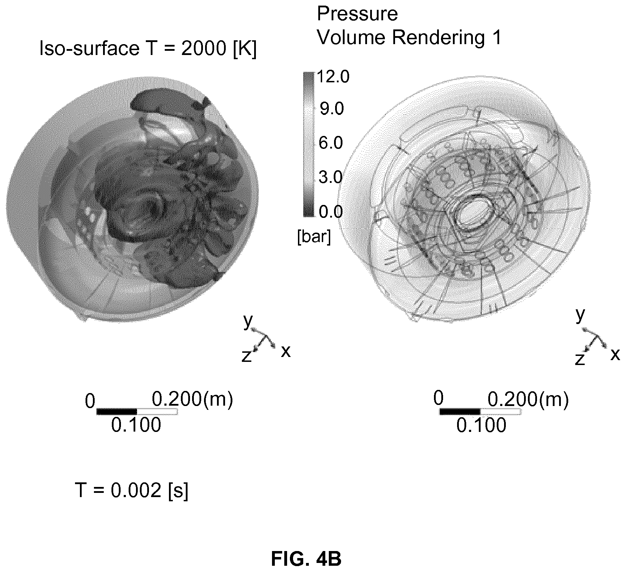

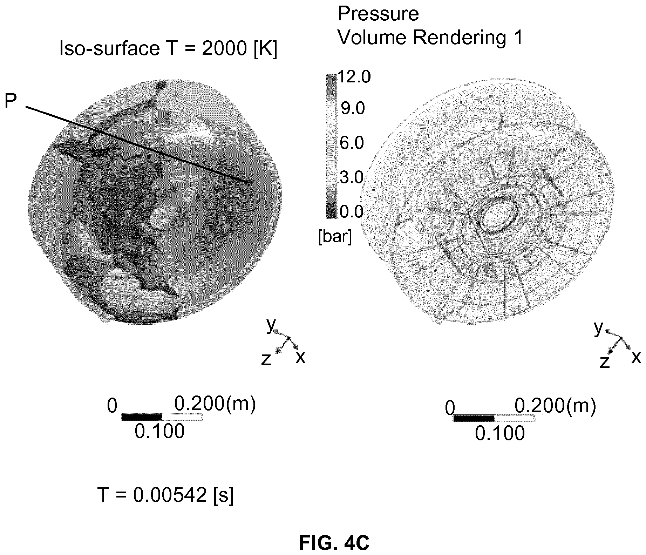

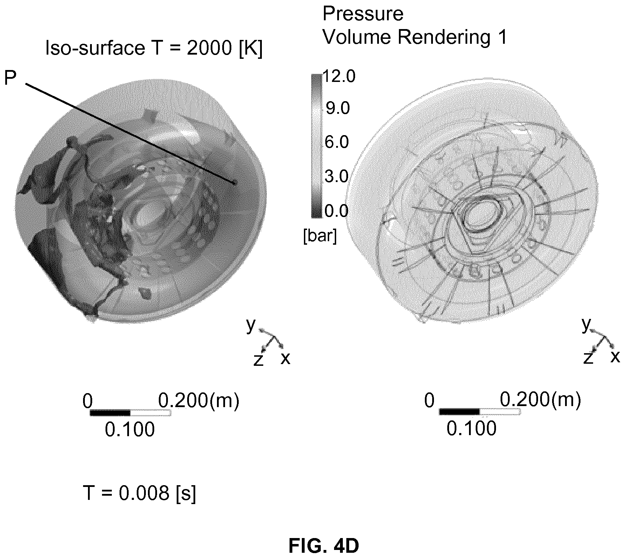

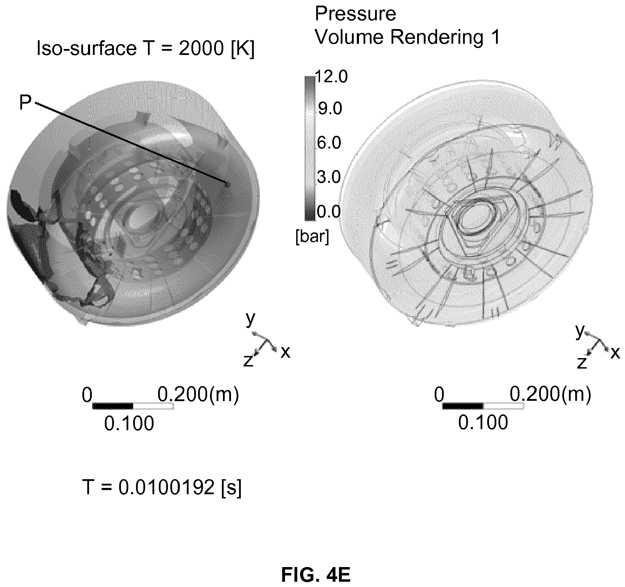

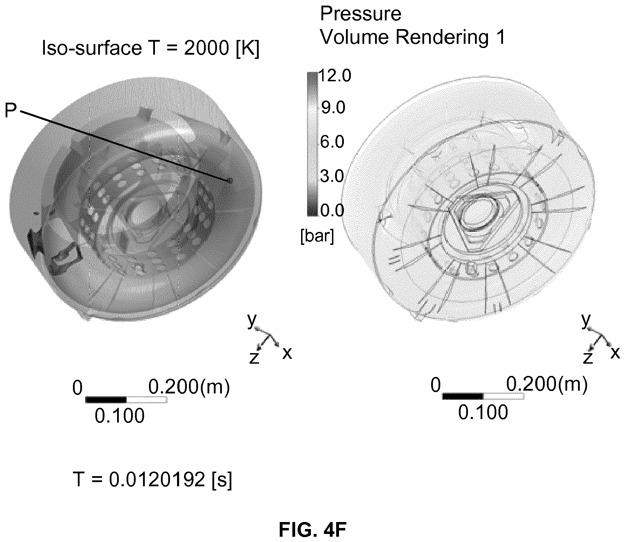

Figures 4A to 4F are graphical representations showing, over time, the flame front and the pressure inside the cavity of a rotating electrical machine having the pressure attenuator 1 according to the first embodiment of the present invention. Similarly to that illustrated in Figures 1A to 1D, the point P corresponds to the ignition point, the figures on the left represent the flame front at a temperature of 2000 K and the figures on the right represent the pressure, in bar, inside the cavity.

As can be seen in Figures 4A to 4F , the device 1 segregates the flame front, thus avoiding it compresses and directs the gases that have not yet passed through the combustion process. Thus, with the use of the device 1 of the present invention, an expressive reduction of pressure inside the cavity of the rotating electrical machine is obtained.

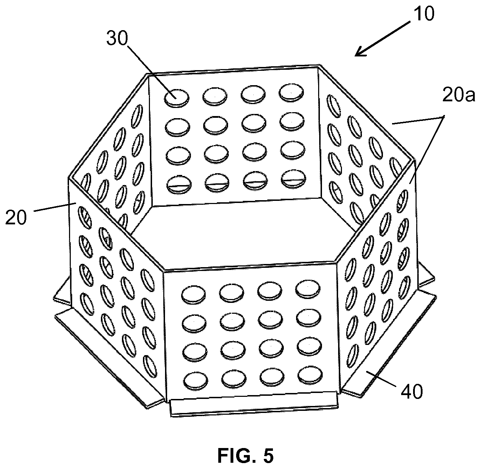

Figure 5 shows a second embodiment of the present invention, where the screen 10 is formed by a polyhedron-shaped wall 20 defined by a finite plurality of wall sides 20a. The plurality of openings is disposed on the plurality of wall sides 20a.

Although Figure 5 illustrates a wall with 6 wall sides, it should be understood that the number of polyhedral wall sides could be larger or smaller without departing from the inventive concept of the present invention. Preferably, the finite number of sides of the polyhedron shaped wall is between 3 and 30 sides.

The screen 10 may further comprise edges 40 substantially perpendicular to the side walls 20a. These edges 40 can be used for attaching the screen 10 to the machine, for example, by means of screws.

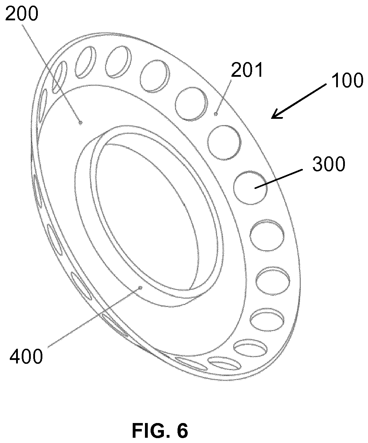

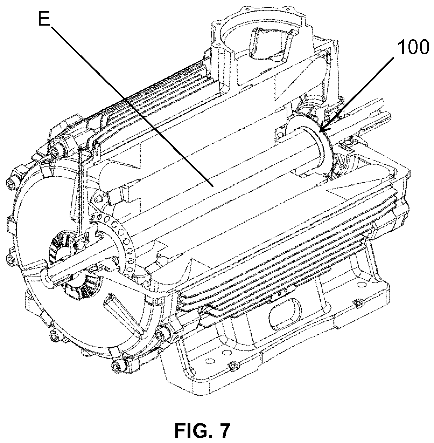

Figures 6 and 7 show a third embodiment of the pressure attenuator device. In this embodiment, the screen comprises a disk 100 defined by a flat wall 200 and an inclined wall 201, the inclined wall 201 having a plurality of openings 300.

The device 100 may further comprise an edge 400 that aids its attachment to the machine.

The disk 200 is preferably fixed to the end cover of the rotating electric machine. As known to those skilled in the art, the cover is the end portion of the machine casing, ie, the element responsible for closing the casing in the axial direction.

The attachment of the disk to the cover is performed by means of bolts and spacer sleeves.

Preferably, the device 100 is positioned concentrically and coradial to the center of the stator coils, and in the axial direction between the head coil and the casing cover.

A second arrangement for the disk 100 is its mounting on the axle E of motor. The attachment of the disk to the axle E may be performed by interference or by means of a fastening element. Figure 7 illustrates this arrangement. It should be noted that in this embodiment, the device 100 is installed on the axle E next to the bearing, in order to prevent the spread of flame to the outside of the casing, through the interstitial generated between the axle and the casing.

It should be noted that the device of the present invention could be made of any suitable material such as steel, cast iron or thermoset.

After the description of three examples of preferred embodiments, it should be understood that the scope of the present invention covers other possible variations, being limited solely by the contents of the appended claims, including therein the possible equivalents.

## Claims

1. Rotating electrical machine of the type that has a casing with a cover defining a cavity and a rotor-stator assembly inside the casing, the electrical machine **characterized by** comprising a pressure attenuator device inside the cavity, positioned concentrically to the center of the stator coils and in axial direction between the head coil and the casing cover, the device (1, 10, 100) comprising a screen comprising:
∘ a circular ring (2) defined by a cylindrical wall, with a plurality of openings (3) being disposed on the ring wall, or
∘ a polyhedron-shaped wall (20) defined by a plurality of wall sides (20a), with a plurality of openings (30) being disposed on the wall sides (20a), or
∘ a disk defined by a flat wall (200) and a inclined wall (201) which projects from the flat wall, with a plurality of openings (300) being disposed on the inclined wall (201),
wherein the openings are configured to segregate a flame front propagating from an ignition source formed by a combustion process originated in the cavity.

2. Rotating electrical machine, according to claim 1, wherein the pressure attenuator device is attached to the cover of the rotating electrical machine.

3. Rotating electrical machine, according to claim 1, wherein the pressure attenuator device is attached to a coil of the rotor-stator assembly of the electrical machine.

4. Rotating electrical machine, according to claim 1, wherein the pressure attenuator device is attached to an axle of the electrical machine.

## Patentansprüche

1. Rotierende elektrische Maschine des Typs, der ein Gehäuse mit einer Abdeckung, die einen Hohlraum definiert, und eine Rotor-Stator-Anordnung innerhalb des Gehäuses aufweist, wobei die elektrische Maschine **dadurch gekennzeichnet ist, dass** sie eine innerhalb des Hohlraums angeordnete Druckdämpfungsvorrichtung aufweist, die konzentrisch zur Mitte der Statorspulen und in der axialen Richtung zwischen dem Spulenkopf und der Gehäuseabdeckung angeordnet ist, wobei die Druckdämpfungsvorrichtung (1, 10, 100) eine Abschirmung aufweist, mit:
einem kreisförmigen Ring (2), der durch eine zylindrische Wand definiert ist, wobei in der Ringwand mehrere Öffnungen (3) ausgebildet sind; oder
einer polyederförmigen Wand (20), die durch mehrere Wandseiten (20a) definiert ist, wobei in den Wandseiten (20a) mehrere Öffnungen (30) ausgebildet sind; oder
einer durch eine flache Wand (200) definierten Scheibe und einer von der flachen Wand abstehenden schrägen Wand (201), wobei in der schrägen Wand (201) mehrere Öffnungen (300) ausgebildet sind,
wobei die Öffnungen dafür konfiguriert sind, eine Flammenfront aufzuspalten, die sich von einer Zündquelle ausbreitet, die durch einen im Hohlraum stattfindenden Verbrennungsprozess erzeugt wird.

2. Rotierende elektrische Maschine nach Anspruch 1, wobei die Druckdämpfungsvorrichtung an der Abdeckung der rotierenden elektrischen Maschine befestigt ist.

3. Rotierende elektrische Maschine nach Anspruch 1, wobei die Druckdämpfungsvorrichtung an einer Spule der Rotor-Stator-Anordnung der elektrischen Maschine befestigt ist.

4. Rotierende elektrische Maschine nach Anspruch 1, wobei die Druckdämpfungsvorrichtung an einer Achse der elektrischen Maschine befestigt ist.

## Revendications

1. Machine électrique tournante du type qui comporte un carter avec un capot définissant une cavité et un ensemble rotor-stator à l'intérieur du carter, la machine électrique **caractérisée en ce qu'**elle comprend un dispositif atténuateur de pression à l'intérieur de la cavité, positionné de façon concentrique au centre des bobines de stator et en direction axiale entre la bobine de tête et le capot de carter, le dispositif (1, 10, 100) comprenant un blindage comprenant :
- une bague circulaire (2) définie par une paroi cylindrique, avec une pluralité d'ouvertures (3) étant disposées sur la paroi de bague, ou
- une paroi de forme polyédrique (20) définie par une pluralité de côtés de paroi (20a), avec une pluralité d'ouvertures (30) disposées sur les côtés de paroi (20a), ou
- un disque défini par une paroi plate (200) et une paroi inclinée (201) qui fait saillie de la paroi plate, avec une pluralité d'ouvertures (300) étant disposées sur la paroi inclinée (201),
dans laquelle les ouvertures sont configurées pour isoler un front de flamme se propageant depuis une source d'allumage formée par un processus de combustion émanant de la cavité.

2. Machine électrique tournante, selon la revendication 1, dans laquelle le dispositif atténuateur de pression est fixé au capot de la machine électrique tournante.

3. Machine électrique tournante, selon la revendication 1, dans laquelle le dispositif atténuateur de pression est fixé à une bobine de l'ensemble rotor-stator de la machine électrique.

4. Machine électrique tournante, selon la revendication 1, dans laquelle le dispositif atténuateur de pression est fixé à un essieu de la machine électrique.
